# EUROPÄISCHE PATENTANMELDUNG

(11) **EP 2 280 387 A1**
(43) Veröffentlichungstag der Anmeldung: **02.02.2011**
(21) Anmeldenummer: 10168730.9
(22) Anmeldetag: 07.07.2010
(51) Int. Cl.: G09F 21/04, B60R 13/00

(54) **Emblem für Kraftfahrzeuge**

(30) Priorität: 27.07.2009 DE 102009034882
(71) Anmelder: Schroeder, Michael, 74251 Lehrensteinsfeld (DE)
(72) Erfinder: Schroeder, Michael, 74251 Lehrensteinsfeld (DE)
(74) Vertreter: Wolf, Eckhard

(57) **Zusammenfassung**

Die Erfindung betrifft ein Emblem zur Befestigung an einem Fahrzeug, mit einem zumindest in seinem Randbereich konkav ausgebildeten Grundkörper (10) und einer im Randbereich der konkaven Partie angeordneten, sich zumindest abschnittsweise über den Umfang erstreckenden Klebstoffbahn (12) zur Befestigung des Emblems auf einem Substrat, wobei auf der der Befestigungsseite abgewandten Sichtseite (14) des Grundkörpers (10) ein Motiv vorgesehen ist. Das Substrat ist bevorzugt ein an der Front- und/oder Heckpartie des Fahrzeugs angeordnetes Herstellerkennzeichen.

## Beschreibung

Die Erfindung betrifft ein Emblem zur Befestigung an einem Fahrzeug.

Kraftfahrzeugbesitzer haben oft den Wunsch, persönlichen Interessen, Hobbys, Begeisterung oder Mitgliedschaft für bzw. in einem Verein und dergleichen im Wege einer Modifikation an ihrem Fahrzeug Ausdruck zu verleihen. Bekannt ist es zum Beispiel, einen entsprechenden Aufkleber aus bedruckter Kunststofffolie an dem Fahrzeug, meistens im Heckbereich, anzubringen. Weiterhin ist es im Zuge internationaler Fußballmeisterschaften in jüngerer Zeit bekannt geworden, eine Nationalflagge kleineren Formats mittels einer Haltervorrichtung aus Kunststoff im Bereich eines Seitenfensters des Fahrzeugs anzubringen. Eine derartige Flagge kann jedoch bei höheren Fahrgeschwindigkeiten durch den dann herrschenden Fahrtwind aus ihrer Befestigung gerissen werden und ist nur schlecht gegen Diebstahl oder vorsätzliche Beschädigung geschützt. Andererseits lässt sich eine solche Flagge im Gegensatz zu einem Aufkleber schnell und einfach vom Fahrzeug entfernen, ohne dass die Gefahr einer Beschädigung der Fahrzeuglackierun gegeben wäre.

Ausgehend hiervon liegt der Erfindung die Aufgabe zugrunde, ein Gestaltungsprodukt für Kraftfahrzeuge zu schaffen, das einerseits einen hinreichenden Schutz gegen spontane Diebstahlversuche bietet, das jedoch andererseits mit einfachen Mitteln beschädigungsfrei vom Fahrzeug entfernt werden kann.

Zur Lösung dieser Aufgabe wird die in Patentanspruch 1 angegebene Merkmalskombination vorgeschlagen. Vorteilhafte Ausgestaltungen und Weiterbildungen der Erfindung ergeben sich aus den abhängigen Ansprüchen.

Die Grundidee der Erfindung besteht darin, ein bereits am Fahrzeug vorhandenes Herstellerkennzeichen mit einem wunschgemäß gestalteten eigenen Emblem zu überdecken. Da übliche erstellerkennzoichen in aller Regel mehr oder weniger konvex ausgestaltet sind, sollte das Emblem zumindest auf der dem Fahrzeug zugewandten Seite im radial äußeren Bereich konkav geformt sein. Gemäß der Erfindung weist das Emblem einen zumindest in seinem Randbereich konkav ausgebildeten Grundkörper und eine im Randbereich der konkaven Partie angeordnete, sich zumindest abschnittsweise über den Umfang erstreckende Klebstoffbahn zur Befestigung des Emblems auf einem Substrat auf, wobei auf der der Befestigungsseite abgewandten Sichtseite des Grundkörpers ein Motiv vorgesehen ist. Die Befestigung des Emblems erfolgt demnach über eine einige Millimeter, etwa 2 bis 12 mm, breite Klebstoffschicht, die am äußeren Innenrand des Emblems angeordnet ist. Die konkave Form des Emblems erlaubt es, die Klebung im Randbereich eines vorhandenen Herstellerkennzeichens vorzunehmen. Ein unbefugtes Entfernen wird erschwert, da die Form nur schwer zu greifen ist. Zum Entfernen kann ein einfaches Werkzeug, etwa ein Messer, ein Spachtel oder ein kleiner Schraubenzieher, verwendet werden, das vorsichtig am Rand entlang gestoßen oder gezogen wird, um die Verklebung zu lösen.

In bevorzugter Ausgestaltung der Erfindung ist die Außenkontur des Grundkörpers an die Außenkontur eines Kraftfahrzeug-Herstelleremblems angepasst. Dies kann eine runde Kontur, eine Kontur mehrerer ineinandergreifender Ringe, eine runde Kontur mit die Kreisform durchbrechenden Fortsätzen, eine rautenförmige Kontur und dergleichen mehr sein.

Der Grundkörper des Emblems kann eine kalottenform* aufweisen, also einen über den Durchmesser des Grundkörpers konstanten Krümmungsradius. Diese Form bietet sich insbesondere für eine Anbringung auf kreisrunden Herstellerkennzeichen an. Der Grundkörper kann dabei beispielsweise einen Durchmesser im Bereich von 50 bis 250 mm aufweisen und der Krümmungsradius etwa 10 bis 1200 mm betragen.

In weiter bevorzugter Ausgestaltung der Erfindung ist das Motiv auf der Sichtseite des Grundkörpers eine Wiedergabe der Farben einer Nationalflagge, das Wappen eines Vereins, eines Landes oder einer Stadt, ein Unternehmenskennzeichen oder ein Kennzeichen eines Berufverbands. Der Motivvielfalt sind jedoch grundsätzlich keine Grenzen gesetzt, so dass auch Tiermotive, Fantasiemotive, Fotomotive oder andere grafische Motive möglich sind.

Der Grundkörper des Emblems ist vorteilhaft ein geformtes Metallblech, vorzugsweise ein rostfreies Stahlblech, oder ein unststoffteil. Wichtig ist eine gegenüber Feuchtigkeit, Vibrationen, Wärme und Lichteinwirkung unempfindliche Bauweise. Die Herstellung des Grundkörpers kann bei Metallbauweise durch ein Stanz- und/oder Tiefziehverfahren oder bei Kunststoffbauweise durch ein Spritzgussverfahren erfolgen. Das Motiv kann in den Grundkörper eingeprägt (und gegebenenfalls mit Farben versehen) oder mittels eines lichtechten Lacks auf dessen Sichtseite gedruckt sein. Bevorzugt ist das Motiv auf einer lichtechten Folie aufgedruckt, die auf den Grundkörper aufgeklebt wird. Da das Emblem unterschiedlichen Witterungseinflüssen ausgesetzt ist, sollte das Motiv gegenüber diesen beständig sein.

Der verwendete Klebstoff ist zweckmäßig ein elastomerer Klebstoff, beispielsweise ein geschäumtes Elastomer, mit einer Schichtdicke von 0,4 bis 2,5 mm, wie er grundsätzlich aus der automobilen Karosserietechnik bekannt ist.

Die einige zehntel Millimeter dicke Klebstoffschicht stellt sicher, dass eine konturengerechte Montage des Emblems möglich ist, d.h. dass gewisse Abweichungen der aufeinandertreffenden Radien des Emblems und des Substrats ausgeglichen werden können.

Der verwendete Klebstoff soll einerseits einen sicheren Halt auf dem Substrat (gegen Verlust oder unbefugte Entfernungsversuche) und andererseits eine beschädigungsfreie Entfernbarkeit ermöglichen. Vorteilhaft ist eine Zugfestigkeit des Klebstoffs von mindestens 35 N/cm² und eine Scherfestigkeit von mindestens 30 N/cm². Weiterhin sollte der Klebstoff beständig sein gegen typischerweise auftretende Temperaturen und chemische Einwirkungen wie übliche Kraft- und Schmierstoffe oder Reinigungsmittel (bei der Fahrzeugreinigung in Waschstraßen oder bei manueller Fahrzeugpflege) sowie die im Betrieb des Fahrzeugs auftretenden Erschütterungen und Vibrationen.

Ein weiterer Vorteil des erfindungsgemäßen Emblems ist darin zu sehen, dass es vorhandene Herstellerkennzeichen bzw. -logos überdeckt, die in der Regel an exponierter Stelle an der Front- und/oder Heckpartie des Fahrzeugs angeordnet sind, und damit durch den unerwarteten oder überraschenden optischen Eindruck einen guten Blickfang darstellt. Ein weiterer großer Vorteil besteht darin, dass das Emblem keine lackierten Fahrzeugteile überdeckt, die im Laufe der Zeit zu angrenzenden Lackbereichen unterschiedlich ausbleichen könnten. Dies ist ein Grund, warum viele Kraftfahrzeugbesitzer von dem Anbringen herkömmlicher Aufkleber absehen.

Wie bereits oben ausgeführt wurde, ist es von großem Vorteil, wenn der Randbereich des Emblems (zum Fahrzeug hin) konkav ausgebildet ist, um eine sichere Befestigung zu ermöglichen. In einem zentralen eroich kann das Emblem jedoch durchaus eben oder anderweitig konturiert gestaltet sein. Es können beispielsweise verschiedene Krümmungsradien über den Durchmesser vorgesehen sein.

Ein weiterer Aspekt hinsichtlich der Diebstahlhemmung des Emblems ist darin zu sehen, dass bei einem versuchten, unbefugten Entfernen höchstens das vergleichsweise leicht zu ersetzende Herstelleremblem beschädigt wird. Das erfindungsgemäße Emblem ist gegenüber herkömmlichen Aufklebern oder Zierelementen nicht für die Montage auf empfindlichen, lackierten Bereichen des Fahrzeugs vorgesehen.

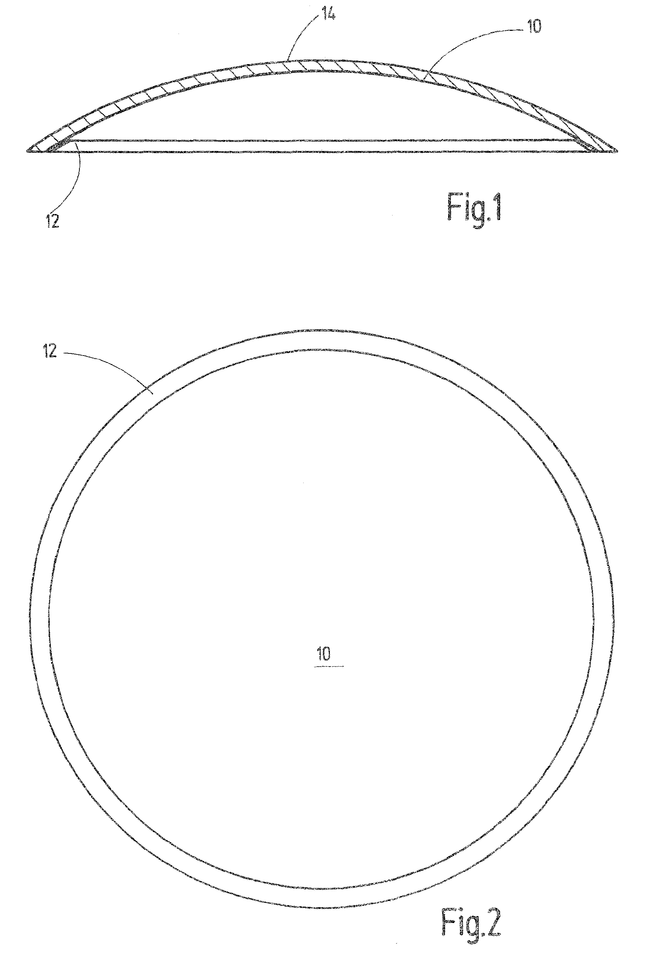

Im Folgenden wird die Erfindung anhand der in der Zeichnung in schematischer Weise dargestellten Ausführungsbeispiele näher erläutert. Es zeigen
- Fig. 1: eine Querschnittsansicht eines kalottenförmigen Ausführungsbei- spiels des erfindungsgemäßen Emblems, und
- Fig. 2: eine Unteransicht des Emblems gemäß Fig. 1.

Das in der Zeichnung dargestellte Emblem weist einen Grundkörper 10 auf, der als kalottenförmiges Blechteil ausgebildet ist. Das Emblem weist einen Durchmesser von etwa 130 mm und eine Höhe von etwa 7 mm auf. Der Radius der Kalotte beträgt etwa 300 mm. Der Rand des Grundkörpers 10 ist auf der konkaven Seite mit einer Klebstoffbahn 12 versehen. Die Klebstoffbahn 12 ist in der Zeichnung als sich geschlossen über den Umfang des Grundkörpers 10 erstreckend dargestellt. Es ist jedoch auch möglich, mehrere lebstoffbahnabschnitte vorzusehen, die über den Umfang verteilt sind. Zweckmäßig ist die lebsto bahn mit einer vor der Befestigung des Emblems am Fahrzeug zu entfernenden Schutzfolie für den Transport und die Lagerung versehen. Auf der konvex geformten Sichtseite 14 des Emblems ist ein Motiv vorgesehen, dass in den Grundkörper eingeprägt oder auf diesen auflackiert oder -laminiert sein kann. Während die Zeichnung ein kreisrundes Emblem darstellt, können erfindungsgemäße Embleme auch oval, rautenförmig und dergleichen mehr sein, je nach der Form des Herstellerkennzeichens, das von dem Emblem überdeckt werden soll. Weiterhin ist es nicht erforderlich, dass das Emblem durchgehend konvex bzw. konkav ausgebildet ist. Vielmehr sollte zumindest der Randbereich mit der Klebstoffbahn 12 zur Fahrzeugseite hin konkav gekrümmt sein, um eine sichere Befestigung auf dem erstellerkennzeichen zu ermöglichen. Die zentrale Partie des Grundkörpers 10 kann dagegen auch beispielsweise eben ausgebildet sein.

Zusammenfassend ist folgendes festzuhalten: Die Erfindung betrifft ein Emblem zur Befestigung an einem Fahrzeug, mit eine zumindest in seinem Randbereich ausgebildeten Grundkörper 10 und einer im Randbereich der konkaven Partie angeordneten, sich zumindest abschnittsweise über den Umfang erstreckenden Klebstoffbahn 12 zur Befestigung des Emblems auf einem Substrat, wobei auf der der Befestigungsseite abgewandten Sichtseite 14 des Grunkörpers 10 ein Motiv vorgesehen ist.

## Patentansprüche

1. Emblem zur Befestigung an einem Fahrzeug, mit einem zumindest in seinem Randbereich konkav ausgebildeten Grundkörper (10) und einer im Randbereich der konkaven Partie angeordneten, sich zumindest abschnittsweise über den Umfang erstreckenden Klebstoffbahn (12) zur Befestigung des Emblems auf einem Substrat, wobei auf der der Befestigungsseite abgewandten Sichtseite (14) des Grundkörpers ein Motiv vorgesehen ist.

2. Emblem nach Anspruch 1, **dadurch gekennzeichnet, dass** die Außenkontur des Grundkörpers (10) an die Außenkontur eines Kraftfahrzeug-Herstelleremblems angepasst ist.

3. Emblem nach Anspruch 1 oder 2, **dadurch gekennzeichnet, dass** der Grundkörper (10) eine Kalottenform aufweist.

4. Emblem nach einem der Ansprüche 1 bis 3, **dadurch gekennzeichnet, dass** der Grundkörper (10) einen Durchmesser im Bereich von 50 bis 250 mm aufweist und der Krümmungsradius des konkaven Bereichs etwa 100 bis 1200 mm beträgt.

5. Emblem nach einem der Ansprüche 1 bis 4, **dadurch gekennzeichnet, dass** das Motiv die Farben einer Nationalflagge, das Wappen eines Vereins, eines Landes oder einer Stadt, ein Unternehmenskennzeichen, eine fotografische Darstellung oder ein Kennzeichen eines Berufverbands Darstellt.

6. Emblem nach einem der Ansprüche 1 bis 5, **dadurch gekennzeichnet, dass** der Grundkörper (10) ein geformtes Metallblech, vorzugsweise ein rostfreies Stahlblech, oder ein Kunststoffteil ist.

7. Emblem nach einem der Ansprüche 1 bis 6, **dadurch gekennzeichnet, dass** das Motiv in den Grundkörper (10) eingeprägt, mittels eines lichtechten Lacks auf dessen Sichtseite gedruckt, oder als Folie aufgeklebt ist.

8. Emblem nach einem der Ansprüche 1 bis 7, **dadurch gekennzeichnet, dass** der Klebstoff (12) ein elastomerer Klebstoff mit einer Schichtdicke von 0,4 bis 2,5 mm ist.

9. Emblem nach eine der Ansprüche 1 bis 8, **dadurch gekennzeichnet, dass** der Klebstoff (12) zugfestigkeit von mindestens 35 N/cm² und eine Scherfestigkeit von mindestens 30 N/cm² aufweist.
